Europäisches Patentamt

European Patent Office

Office européen des brevets

(11) Publication number: **0 000 846**

A1

(12) **EUROPEAN PATENT APPLICATION**

(21) Application number: **78300272.8**

(22) Date of filing: **09.06.78**

(51) Int. Cl.²: **H 02 H 5/10,** H 02 H 3/16
H 01 H 83/00

(30) Priority: **11.06.77 GB 33755/77**

(43) Date of publication of application:
**21.02.79 Bulletin 79/4**

(84) Designated contracting states:
**DE FR GB NL**

(71) Applicant: **British Gas Corporation**
**59 Bryanston Street**
**London, W1A 2AZ(GB)**

(72) Inventor: **Robinson, Albert Norman**
**70 Lancercost Drive**
**Newcastle upon Tyne NE5 2DJ(GB)**

(74) Representative: **Wallace, Walter**
**British Gas Corporation Patents Department 326 High**
**Holborn**
**London, W1CV 7PT(GB)**

(54) Electrical protection device for checking the earth connection.

(57) An electrical earth circuit testing arrangement that will discern whether or not an electrical appliance is properly earthed and in the event of the appliance being inadequately earthed, the circuit testing arrangement stops the appliance from being energised.

FIG.2.

EP 0 000 846 A1

This invention relates to electrical earth testing equipment particularly for testing whether an electrical installation is earthed properly.

Whenever an electrical appliance is operated all exposed metal parts must be securely earthed to avoid any electrical shock to the operator. In buildings this is accomplished by connecting the metal parts of the appliance via a wire to the earthing point in the normal three pin mains socket. However, when electrical appliances are used on building sites and other outside locations, the earthing system is usually of a temporary nature. It is advisable therefore in such cases, that a qualified electrical person should be on site to check the earthing of the appliance, and his decision would be based on a knowledge of the over-load cut-out requirements of the appliance, a test reading and reference to IEE regulations. The regulations tabulate maximum earth loop impedance values for earth leakage protection and these must be adhered to for safety reasons.

The invention as claimed provides an improved electrical circuit arrangement for checking whether or not an electrical installation is earthed properly. This is achieved by checking whether the earth loop impedance is of a value that is acceptable and if this is so it is possible by the switching arrangement of the electrical circuit to allow power to be supplied to the electrical installation. If the earth loop impedance is at a value that is not acceptable then the electrical circuit arrangement does not allow the electrical installation to be energised.

The advantages of the present invention is that the circuit arrangement is capable of testing and indicating whether or not an electrical supply earthing system is suitable and safe for an electrical installation to be connected to an energy source.

A further advantage of the circuit arrangement is that the test as to whether or not the electrical supply earthing system is satisfactory, is carried out each time the supply to the appliance has to be initiated, that is to say, the "initiating device" must be operated every time the appliance is to be connected to the supply. Furthermore, the arrangement provides that for every disconnection, or fall in supply potential, a "switching device" will be turned off.

To enable the invention to be more clearly understood and solely by way of example one embodiment of an electric circuit arrangement in accordance with the invention, and its operation, will be described with reference to the accompanying drawings, in which:-

Figure 1 is an electric circuit diagram showing the arrangement of the electrical components connected to an appliance, and

Figure 2 is a schematic block diagram showing the position of the electric circuit arrangement connected to an appliance and an electrical sub-station.

The circuit arrangement comprises, a circuit breaker 1 having an integral  tching means 2 and an undervolt trip coi  .

momentary action switch 4, a relay 6 having a first relay coil 7 and a second coil 8, rectifying means 9 and 10, a resistor 11 and a transformer 12 having a first secondary coil 13 and a second secondary coil 14.

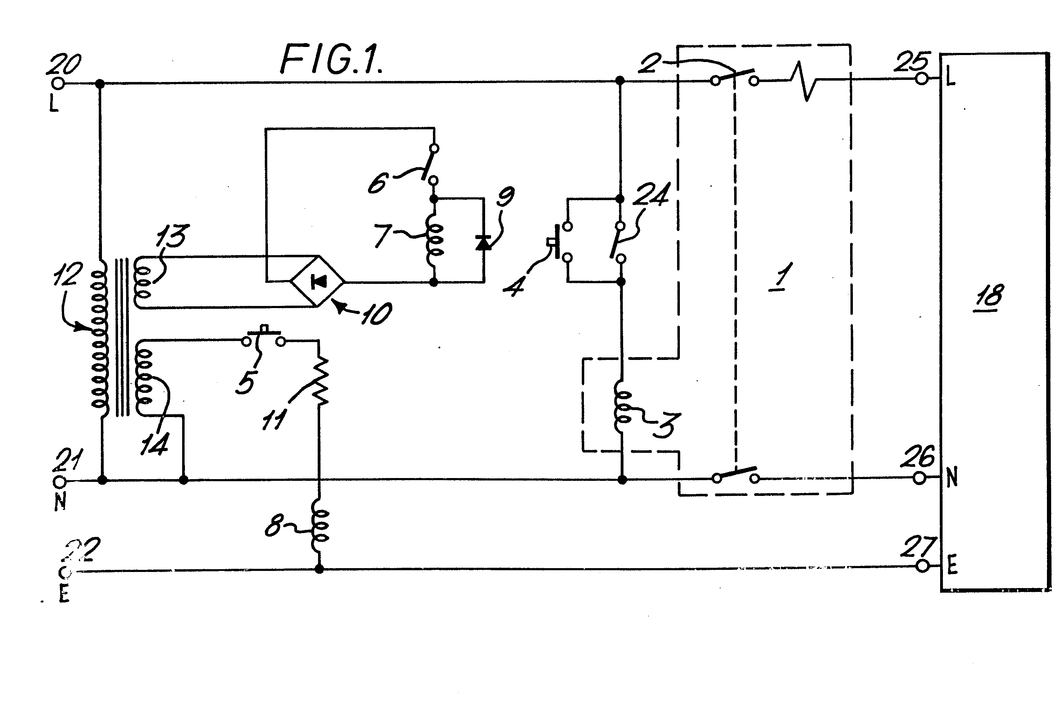

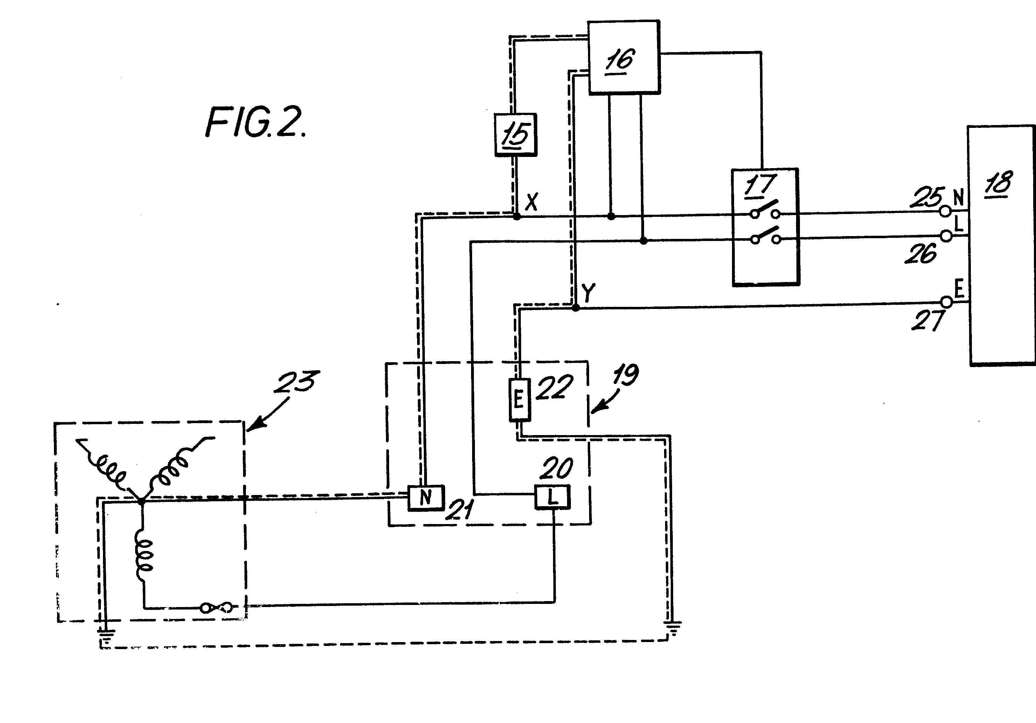

With reference also to Figure 2, the aforesaid circuit arrangement is divided into three parts, that is to say, sensing device 15, an initiating device 16 and a switching device 17. The switching device 17 is basically the circuit breaker 1; the initiating device 16 is the relay 6 with its associated first relay coil 7 and rectifying means 9 and switch 4; whilst the sensing device is the transformer 12 connected to the resistor 11 and the second relay coil 8. The circuit arrangement is connected to an appliance 18, which is under test for proper earthing arrangements, via terminals 25, 26 and 27. The current supply socket 19 has live neutral and earth connections 20, 21 and 22 respectively which are also shown in Figure 1. The supply socket 19, in use, is connected to a sub-station power supply 23 which is a three phase enclosed fused supply.

In use, the circuit arrangement is connected (as shown in Figure 2) to the appliance 18 and the supply socket 19, which in turn is connected to the sub-station power supply 23. The preferred circuit operation involves the following steps. An alternating current supply from the sub-station 23 is connected to the primary of the transformer 12 via terminals 20 and 21. A push button switch 5 is depressed closing its contacts so that a current is injected into a neutral earth loop whereby a current flows (as shown by the chain dotted line in Figure 2) between the points X and Y. The switch 4 will close and by-pass the normally open contact 24. The "sensing device" 15 is calibrated to discern a specific value of current and hence a specific value of impedance, termed the "set point".

At values below this "set point", a signal is given to the "initiating device" 16 which in turn allows the "switching device" 17 to be turned on, thus connecting the appliance 18 to the source of supply.

At the values above the "set point" the "initiating device" 16 is instructed to inhibit the turning on of the "switching device" 17.

The circuit breaker undervolt trip coil 3 is energised at this present moment whilst the switch 2 is turned to the On position. Two modes of operation will now possibly follow.

In the first mode of operation, if the current flowing through the neutral-earth loop is equal to or greater than the value for which the second relay coil 8 is calibrated, this coil 8 will energise and cause the contacts 6 and 24 to close. The first relay coil 7 will energise via the contacts 6 and maintain energisation of the coil 7. Upon release of the push button 4, supply will be maintained to the appliance and the second relay coil 8 will de-energise.

In the second mode of operation, if the current flowing through the neutral-earth loop is less than that for which the second relay coil 8 is calibrated, the coil 8 will not energise and the contacts 24 and 6 will remain open. Upon release of the push button 4 the undervolt trip coil 3 will de-energise and return the circuit breaker 0000846 switch 2 to the Off position.    Consequently, the appliance will not be able to operate as the supply has been cut from the terminals 25 and 26.

An advantage of the present invention is that the circuit arrangement is capable of testing and indicating whether or not an electrical supply earthing system is suitable for connection to an appliance.

Furthermore a circuit arranged in accordance with the present invention avoids the necessity of the presence of qualified electrical personnel to test whether or not the earthing systems are adequate.

An additional advantage of a circuit arrangement in accordance with the present invention is that the aforesaid discrimination as to whether or not the electrical supply earthing system is satisfactory, is carried out each time the supply to the appliance has to be initiated, that is to say, the "initiating device" must be operated every time the appliance is to be connected to the supply.    Furthermore, the arrangement provides that for every disconnection, or fall in supply potential, the "switching device" will be turned off.

<u>CLAIMS</u>

1. An electrical earth testing arrangement comprising a sensing device (15) which includes a transformer (12) connected to a resistor (11) and a relay coil (8), an initiating device (16) which includes a relay (6), a relay coil (7), a rectifying means (9) and a switch (4), a switching device (17) which includes a circuit braker (1), and a switch (5) wherein, in use, an alternating current supply is connected to the primary of the transformer (12), a switch (5) is closed so that a current is injected into a neutral earth loop, the sensing device (15) discerns the value of the current and hence a specific value of impedance which will be termed the "set point", and with values of current below this set point, a signal is given to the initiating device (16) which allows the switching device (17) to be turned on thus connecting an appliance (18) to the source of supply connected to the transformer (12).

2. An earth testing equipment according to Claim 1 which is an arrangement for testing an earth loop impedance of a source of electrical supply connected to an electrical appliance comprising a circuit braker (1) having an under volt trip coil (3) and an integral switching means (4), a further switching means (5) for controlling an electric current supply to the circuit arrangement, a relay (6) provided with a first and a second coil (7, 8), each possessing an operating contact (6, 5), the first coil (7) having a low number of turns arranged in use, to cope with the current injected from a neutral-earth loop, the second coil (8) being a low voltage coil designed to maintain energisation of the armature of said relay (7), a resistor (11) and a transformer having first (13)

0000846

and second (14) secondary coils, the first secondary coil providing a supply for the first relay coil (7) and a neutral-earth loop, and and the second secondary coil providing a supply for the second relay coil (8).

**FIG.1.**

FIG.2.

2/2

0000846

European Patent Office

**EUROPEAN SEARCH REPORT**

| DOCUMENTS CONSIDERED TO BE RELEVANT | | | CLASSIFICATION OF THE APPLICATION (Int. Cl.²) |
|---|---|---|---|
| Category | Citation of document with Indication, where appropriate, of relevant passages | Relevant to claim | H 02 H 5/10<br>H 02 H 3/16<br>H 01 H 83/00 |
| X | <u>GB - A - 844 449</u> (FOSTER)<br>* Pages 1,2; figures * | 1 | |
| X | <u>GB - A - 1 462 383</u> (G.K.LIN)<br>* Page 1, lines 59-76; page 2, line 79 - page 3, line 65; figure 5 * | 1 | |
| | <u>US - A - 3 320 480</u> (C.W.FAYLOR)<br>* Column 2, line 49 - column 3, line 26; figure 1 * | 1,2 | **TECHNICAL FIELDS SEARCHED (Int.Cl.²)** |
| A | <u>US - A - 3 588 603</u> (TEXAS)<br>* Column 2, line 49 - column 4, line 26; figures 1-3 * | | G 01 R 31/02<br>G 01 R 31/04<br>H 02 H 3/16<br>H 02 H 5/10<br>H 01 H 83/00 |
| A | <u>US - A - 3 766 434</u> (S.A.SHERMAN)<br>* Column 1, line 52 - column 2, line 13; figure 3 * | | |
| A | <u>US - A - 4 023 073</u> (D.K.GEORGI)<br>* Column 2, lines 3-22, 35-52; figures 1,2 * | | |

CATEGORY OF CITED DOCUMENTS

X: particularly relevant
A: technological background
O: non-written disclosure
P: Intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 10-10-1978 | LEMMERICH |

EPO Form 1503.1 06.78